# EUROPEAN PATENT SPECIFICATION

(11) **EP 2 522 625 B1**
(45) Date of publication and mention of the grant of the patent: **04.06.2014**
(21) Application number: 12166066.6
(22) Date of filing: 27.04.2012
(51) Int. Cl.: C01B 25/37, C01B 25/45, H01M 4/58, H01M 4/62, H01M 4/02

(54) **Preparation of particulate positive electrode material for lithium ion cells**
Herstellung von teilchenförmigen Positivelektrodenmaterial für Lithiumionzellen
Préparation de matériau d'électrode positive sous forme de particules pour cellules à ion lithium

(30) Priority: 13.05.2011 JP 2011108116
(43) Date of publication of application: 14.11.2012
(73) Proprietor: Shin-Etsu Chemical Co., Ltd., Chiyoda-ku Tokyo (JP)
(72) Inventor: Tsumori, Toshihiro, Echizen-shi, Fukui (JP); Takai, Yasushi, Echizen-shi, Fukui (JP)
(74) Representative: Stoner, Gerard Patrick

(56) References cited:
- US-A1- 2010 233 540
- US-A1- 2010 261 063
- KIRSTEN JENSEN ET AL: "Real-time synchrotron powder X-ray diffraction study of the antisite defect formation during sub- and supercritical synthesis of LiFePO 4 and LiFe 1- x Mn x PO 4 nanoparticles", JOURNAL OF APPLIED CRYSTALLOGRAPHY, vol. 44, no. 2, 24 March 2011 (2011-03-24) , pages 287-294, XP55035233, ISSN: 0021-8898, DOI: 10.1107/S0021889811006522
- GAO ET AL: "Preparation and characterization of nano-particle LiFePO4 and LiFePO4/C by spray-drying and post-annealing method", ELECTROCHIMICA ACTA, ELSEVIER SCIENCE PUBLISHERS, BARKING, GB, vol. 53, no. 4, 30 October 2007 (2007-10-30), pages 1939-1944, XP022322047, ISSN: 0013-4686, DOI: 10.1016/J.ELECTACTA.2007.08.048
- JING XU ET AL: "Direct-hydrothermal synthesis of LiFe1â x Mn x PO4 cathode materials", JOURNAL OF APPLIED ELECTROCHEMISTRY, KLUWER ACADEMIC PUBLISHERS, DO, vol. 40, no. 3, 5 December 2009 (2009-12-05), pages 575-580, XP019790165, ISSN: 1572-8838

## Description

### TECHNICAL FIELD

This invention relates to a method for preparing a particulate positive electrode material for lithium ion cells, typically in high current flow applications.

### BACKGROUND

While prior art secondary batteries including lead-acid batteries and Ni-Cd batteries rely on charge/discharge operations via ionization reaction of hydrogen (H → H⁺+e⁻) and migration of protons in aqueous electrolyte, lithium ion cells rely on charge/discharge operations via ionization of lithium (Li → Li⁺+e⁻) and migration of lithium ions in organic electrolyte. Since lithium metal has a potential of 3 volts versus the standard oxidation-reduction potential, the lithium ion cells allow for discharge at a higher voltage than the conventional secondary batteries.

Additionally, lithium responsible for oxidation-reduction is light. A combination of high discharge voltage with light weight leads to high energy density per unit mass, surpassing the conventional secondary batteries. The lithium ion cells characterized by light weight and high capacity are widely used in laptop computers, mobile phones and other battery-built-in mobile instruments which are currently in common use. The utilization of the lithium ion cell is now extended to the outdoor use requiring high current flow discharge such as power tools, hybrid cars, and electric vehicles.

Lithium ion cell positive electrode materials, typically polyanionic positive electrode materials based on the structure of oxides such as PO₄, SiO₄ and BO₄, are improved in lifetime on repetitive charge/discharge operations, overcharge resistance, and stability on high-temperature exposure. Their properties are appropriate as the positive electrode material for outdoor use batteries and automobile batteries which require durability as well as high current flow discharge. On the other hand, the polyanionic materials have low electric conduction due to their structure. Thus, particles of the polyanionic material must be coated with carbon to form an electroconductive layer so that individual positive electrode material particles may be electrically conductive before the polyanionic material can be used as the battery material.

Of the polyanionic positive electrode materials, those compounds represented by LiMnₓFe₁₋ₓPO₄ are expected to find use in outdoor batteries because they have a robust PO₄ structure having a pyrolysis temperature close to 1,000°C and good charge/discharge properties as the positive material as compared with polyanionic compounds having a SiO₄ structure.

JP-A-2006/032241 describes positive electrode materials for a lithium ion secondary battery comprising composite particles of LiFePO₄, in which optionally part of the Fe compound is replaced with metal element selected from Co, Cr, Mn, Ni, Ti and V, combined with carbon, the particles being spherical (aspect ratio from 1 to 2).

US 2010/0233540A describes preparation of olivine-type lithium iron phosphate composed of secondary (aggregate) particles having a mean particle diameter (D50) of 5 to 100 µm, formed by aggregation of primary particles having a D50 from 50 to 550 nm. Optionally they have a conductive coating, e.g. a carbon coating. Disclosed preparation methods include mixing the primary particles with a binder such as a sugar in a solvent, drying the mixture and aggregating the primary particles to form secondary particles, e.g. by a spray drier, and calcining.

### THE INVENTION

An aim herein is to provide new and effective methods for preparing a particulate positive electrode material for lithium ion cells, by which a particulate polyanionic positive electrode material represented by LiMnₓFe₁₋ₓPO₄ is obtainable as a positive electrode material capable of affording an excellent charge/discharge capacity at high current condition to a lithium ion cell.

The inventors have found that a particulate positive electrode material can be prepared by (1) mixing and dispersing manganese(II) sulfate, iron(II) sulfate, and lithium phosphate and/or lithium hydrogenphosphate in water to form a slurry at pH 5 to 9, (2) feeding the slurry into an autoclave and effecting hydrothermal reaction therein at a temperature of 130 to 180°C to synthesize a lithium compound having the formula (1):

LiMnₓFe₁₋ₓPO₄ (1)

wherein x is a positive number of 0.05 to 0.5, as primary particles, (3) preparing a particle dispersion comprising the primary particles and 4% to 40% by weight of an organic substance based on the weight of the primary particles, spraying the dispersion as mist, granulating, and drying, through a spray dryer, for example, obtaining aggregated particles having an average particle size of 0.5 µm to 4 µm, and (4) firing the aggregated particles at a temperature of 600°C to 780°C for carbonizing the organic substance therein, yielding secondary particles having a carbon content corresponding to 30% to 70% by weight of the carbon content of the aggregated particles prior to the firing step. The resulting secondary particles are the particulate positive electrode material represented by LiMnₓFe₁₋ₓPO₄ and capable of affording an excellent charge/discharge capacity at high current condition to a lithium ion cell.

Accordingly, the invention provides a method for preparing a particulate positive electrode material for lithium ion cells, comprising the steps of:
mixing and dispersing manganese(II) sulfate, iron(II) sulfate, and lithium phosphate and/or lithium hydrogenphosphate in water to form a slurry at pH 5 to 9,
effecting hydrothermal reaction therein at from 130 to 180°C, e.g. after feeding the slurry into an autoclave or pressure vessel, to synthesize lithium compound of formula (1) :

   LiMnₓFe₁₋ₓPO₄ (1)

   wherein x is a positive number of 0.05 to 0.5, as primary particles,
preparing a particle dispersion comprising the primary particles and 4% to 40% by weight of an organic substance based on the weight of the primary particles, spraying the dispersion as mist, granulating, and drying, obtaining aggregated particles having an average particle size of 0.5 µm to 4 µm, and
firing the aggregated particles at a temperature of 600°C to 780°C for carbonizing the organic substance therein, yielding secondary particles having a carbon content corresponding to 30% to 70% by weight of the carbon content of the aggregated particles prior to the firing step, and an average particle size of 0.5 µm to 4 µm.

Typically, the step of spraying the dispersion, granulating, and drying is performed by a spray dryer with fluid spraying nozzles.

### ADVANTAGEOUS EFFECTS

By the method of the invention, a particulate polyanionic positive material represented by LiMnₓFe₁₋ₓPO₄ is obtainable as a positive electrode material capable of affording an excellent charge/discharge capacity at high current condition when used in a lithium ion cell. The lithium ion cell using the particulate positive electrode material is suited in the high current flow application.

### BRIEF DESCRIPTION OF DRAWINGS

FIG. 1 is a SEM micrograph of particulate positive material (secondary particles) obtained in Example 1.
FIG. 2 is a graph showing a discharge power capacity per unit mass of particulate positive material relative to discharge rate of test cells in Example 1 and Comparative Examples 1 and 3.

### FURTHER EXPLANATIONS; OPTIONS AND PREFERENCES

The invention is directed to the synthesis of a lithium compound having the formula (1):

LiMnₓFe₁₋ₓPO₄ (1)

wherein x is a positive number of 0.05 to 0.5, as a positive electrode material for lithium ion cells.

For the polyanionic positive electrode material represented by LiMnₓFe_{1-X}PO₄, the discharge voltage during charge/discharge operation becomes lower as the ratio of Fe to Mn increases, and the initial discharge voltage reaches 3.4 V (versus Li negative electrode) when manganese free (x=0). A cell using manganese-free compound has a low electromotive force. On the other hand, iron-free compound (x=1) offers a high initial discharge voltage of 4.1 V (versus Li negative electrode), but is undesirable from the aspect of cell life. This is because in the fully charged state, Li is completely ionized and desorbed, and the positive electrode material becomes a MnPO₄ single layer, leading to a likelihood of manganese being dissolved out. For these reasons, in order that the composition be practically acceptable, a proportion of Mn relative to the sum of Fe and Mn ranges from 5 mol% to 50 mol%, that is, x in formula (1) has a value of 0.05 to 0.5.

The particulate positive electrode material for lithium ion cells is prepared by first mixing and dispersing manganese(II) sulfate, iron(II) sulfate, and lithium phosphate and/or lithium hydrogenphosphate in water to form a suspension or slurry. The amounts of manganese(II) sulfate, iron(II) sulfate, and lithium phosphate and/or lithium hydrogenphosphate used may be determined in accordance with the composition of the lithium compound having formula (1). In particular, water is preferably used in an amount sufficient to dissolve manganese(II) sulfate and iron(II) sulfate whereby the components are mixed and dispersed therein.

The slurry, or more exactly the solution portion thereof, is at pH 5 or higher, especially pH 6.5 or higher and pH 9 or lower, especially pH 8 or lower. If the slurry is below pH 5, synthesis of a lithium compound having formula (1) is extremely retarded during hydrothermal reaction to be described later. If the pH of the slurry exceeds 9, more hydroxide forms during hydrothermal reaction, and so the slurry becomes a semi-solid gel, impeding uniform reaction. The pH of the slurry may be adjusted by adding lithium hydroxide, ammonia or the like, if necessary.

In the second step the slurry is fed into e.g. an autoclave or airtight pressure vessel where hydrothermal reaction is carried out to synthesize a lithium compound having the formula (1) as primary particles. The temperature of hydrothermal reaction is at least 130°C, especially at least 135°C, and up to 180°C, especially up to 170°C. If the temperature of hydrothermal reaction is below 130°C, the reaction rate is extremely low. At higher temperatures, the properties of the resulting lithium compound are not adversely affected. However, when the temperature exceeds 180°C, the vessel must be resistant to a pressure in excess of 1 MPa. From the practical aspect, the temperature is equal to or lower than 180°C. The time of hydrothermal reaction is typically 1 hour to 72 hours though not particularly limited. By this hydrothermal reaction, the lithium compound having formula (1) is synthesized as primary particles. After hydrothermal reaction, particles of the lithium compound having formula (1) are separated from the slurry by a solid-liquid separation technique such as centrifugation or filtration. The primary particles typically have an average particle size of 0.2 µm to 2 µm. As used herein and throughout the disclosure, the term "average particle size" refers to a median diameter (D₅₀: particle size at 50% cumulative size distribution) as measured by a particle size distribution measuring system using laser diffractometry.

In the third step, a particle dispersion comprising the primary particles of the lithium compound having formula (1) and an organic substance is prepared. The particle dispersion is sprayed as mist, granulated, and dried to form aggregated particles having an average particle size of 0.5 µm to 4 µm.

If the slurry of primary particles of the lithium compound having formula (1) in water is mixed with an organic substance such as sucrose serving as a carbon source, some inconvenience arises. When water is removed therefrom by centrifugation or filtration, a substantial fraction of the organic substance is removed together with the water. When the thus coated particles are subsequently fired for carbonization, the resulting positive material particles are less electroconductive due to a shortage of carbon on the particle surface. Also a great difference in electric conduction can arise between lots of positive material particles. The primary particles resulting from hydrothermal synthesis are extremely fine and thus difficult to handle because they readily agglomerate together or consolidate during the step of firing a mixture of the primary particles and an organic substance and the subsequent steps of the cell manufacture process, for example.

In the present procedure the primary particles of the lithium compound can be recovered or separated from the slurry after the hydrothermal synthesis, and then the primary particles are dispersed again in water to form a dispersion. At this point, the primary particles are combined with the organic substance in an amount of at least 4% by weight, especially at least 5% by weight and up to 40% by weight, especially up to 30% by weight, based on the weight of the primary particles. Notably the organic substance on the primary particles is to be fired for carbonization. In the process the dispersion of the primary particles and organic substance is sprayed and dried to form aggregated particles having a plurality of primary particles agglomerated (i.e., organic substance-laden aggregated particles), after which the aggregated particles are fired. Carbonization can take place in a substantially uniformly mixed state of organic substance and primary particles. As a result, positive material particles (or secondary particles) having satisfactory electric conduction, and reduced or minimal variation thereof, are obtainable. Examples of organic substance to be added to the dispersion include saccharides such as sucrose and glucose, ascorbic acid, polyethylene glycol, and tetraethylene glycol, with preference being given to water-soluble organic substances, especially water-soluble organic substances consisting of carbon, hydrogen and oxygen.

If the aggregated particles have a large particle size, they are easy to handle in the cell electrode manufacturing process, but charge/discharge performance as the positive electrode material becomes poorer in proportion to an increasing particle size. It is believed that the charge/discharge performance is degraded because aggregated particles of a large particle size tend to undergo a different degree of carbonization between the surface layer and the interior during firing although the reason is not limited thereto. On the other hand, if the aggregated particles have too small a particle size, they are difficult to handle in the cell electrode manufacturing process, and in the subsequent firing step, partial fusion can occur between adjacent aggregated particles and thus, the particle size distribution at the end of firing becomes extraordinarily non-uniform. For these reasons, the aggregated particles should have an average particle size of 0.5 µm to 4 µm.

The step of spraying the primary particle dispersion as mist, granulating, and drying to form aggregated particles having an average particle size of 0.5 µm to 4 µm is preferably performed by a spray dryer, especially a spray dryer with fluid spraying nozzles.

The preferred fluid spraying/drying technique is one of spraying a fluid as fine mist on a carrier of compressed air, being injected and drying in hot air. Such fluid spraying forms finer secondary particles than the mechanical granulating/drying technique such as atomizer. The fluid spraying/drying system includes two, four and multiple fluid nozzle systems depending on the number of injection nozzles, any of which can be used herein. Although the fluid spraying/drying system of any type can form aggregated particles having an average particle size of 0.5 µm to 4 µm, a spray dryer with four fluid nozzles is preferably used for forming uniform and fine secondary particles. The conditions (including primary particle concentration, organic substance concentration, dispersion flow rate, drying gas flow rate, and drying temperature) under which the particle dispersion is sprayed and dried by the spray dryer may be suitably determined in accordance with the structure of spray dryer so that the average particle size of aggregated particles may fall in the desired range.

From the aspect of forming aggregated particles having an average particle size of 0.5 µm to 4 µm, it is important that the amount of the organic substance added to the dispersion be in the range of 4 to 40% by weight of the primary particles. If the amount of the organic substance is too small, the bond force of binding primary particles together during spray drying becomes short, making it difficult to form aggregated particles. If the amount of the organic substance is too large, there is a likelihood of aggregated particles fusing together during drying, resulting in secondary particles lacking particle size uniformity, and even a likelihood that many aggregated particles further agglomerate together into extremely large aggregated particles.

Finally the aggregated particles are fired, yielding secondary particles as the particulate positive electrode material. The firing step is carried out to carbonize the organic substance binding primary particles together in the aggregated particles for converting it into a conductive carbon coating. Firing is preferably carried out in an oxygen-free atmosphere, for example, an inert gas atmosphere, typically argon, in order to prevent the organic substance and primary particles from combustion and oxidation upon heating. The firing temperature is at least 600°C, especially at least 650°C and up to 780°C, especially up to 750°C. If the firing temperature is below 600°C, the carbon resulting from the organic substance has too low a crystallinity to provide conduction. If the firing temperature is above 780°C, not only carbonization and recrystallization reactions take place, but also undesirable reduction and decomposition reactions of the lithium compound having formula (1) as the positive electrode material can take place.

In the firing step, the organic substance in the aggregated particles should be carbonized to reduce the carbon content of secondary particles to at least 30% by weight, especially at least 40% by weight, and up to 70% by weight, especially up to 60% by weight of the carbon content of the aggregated particles prior to the firing step. If the firing step causes carbonization to such an extent that the residual carbon content at the end of firing step does not fall in the defined range, a lithium ion cell using the resulting particulate positive electrode material is unsatisfactory in that the charge/discharge capacity is considerably low during charge/discharge operation at a high rate in excess of 1 C, especially discharge operation at such a high current flow value that the fully charged electricity quantity is discharged within one hour.

It is not well understood why the positive electrode material varies its properties depending on the degree of volatilization of carbon during the firing step. If the amount of carbon volatilized off exceeds 70% by weight, the carbon near primary particles in the surface layer of secondary particles at the end of firing is substantially extinguished and thus electric conduction is locally reduced. If the amount of carbon volatilized off is less than 30% by weight, few nano-size voids are created in the carbide structure formed as a result of volatilization of decomposable components of the organic substance, that is, a dense carbon film is formed. The dense carbon film covers the surface of a primary particle to prevent diffusion of electrolyte or Li⁺ ion. These reasons are presumable although the reason is not limited thereto.

In the firing step, the soaking time, especially constant temperature treatment time within the above-defined treatment temperature range is typically several tens of minutes to several hours although the time varies with many factors including the heating and cooling schedules, firing vessel, flow rate and pressure of the surrounding inert gas.

The particulate electrode material (secondary particles) carbon content is e.g. 2 to 15wt% based on the weight of the positive material (Li compound). Average particle size is 0.5 to 4µm. The particulate material is an aspect herein. After preparation, it can be incorporated into a positive electrode composition, positive electrode or lithium ion cell.

### EXAMPLE

Examples of the invention are given below by way of illustration and not by way of limitation.

### Example 1

One (1) mole of lithium phosphate, 0.5 mole of iron(II) sulfate, and 0.5 mole of manganese(II) sulfate were mixed in 1 L of water, and agitated for 30 minutes to form a mixed slurry at pH 6.7. The slurry was fed into an autoclave where it was heated at 150°C for 20 hours to effect hydrothermal reaction to synthesize a lithium compound LiMn_{0.5}Fe_{0.5}PO₄ as primary particles.

The primary particles of the lithium compound were mixed and dispersed in 1.5 L of water together with 20% by weight of sucrose based on the weight of the primary particles. By operating a spray dryer with four fluid nozzles (Fujisaki Electric Co., Ltd.) at a dispersion dropping rate of 20 ml/min and an air blow flow rate of 80 L/min, the dispersion was sprayed as mist, granulated and dried, obtaining sucrose-laden aggregated particles having an average particle size of 2 µm. The carbon content of the sucrose-laden aggregated particles was measured to be 8.1% of the weight of the positive electrode material (lithium compound).

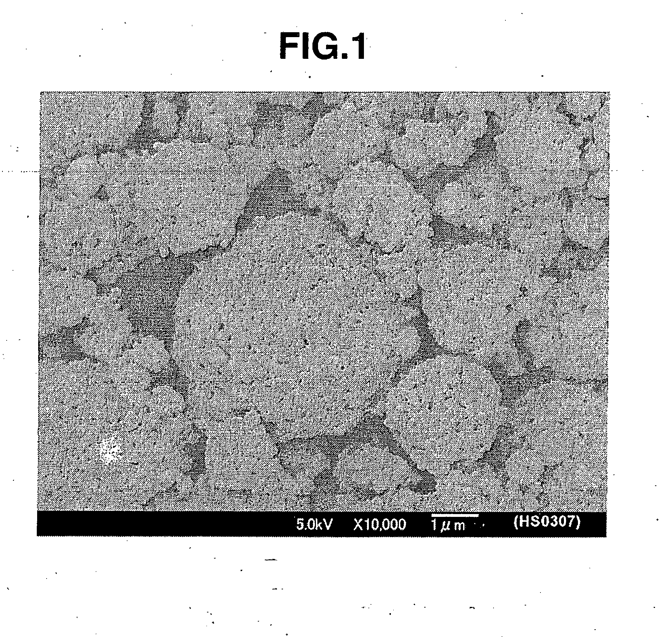

The sucrose-laden aggregated particles were fired in an Ar stream at 740°C for 60 minutes, yielding particulate positive electrode material (secondary particles) having an average particle size of 2.5 µm. FIG. 1 is a SEM micrograph of the secondary particles. The carbon content of the secondary particles was measured to be 4.6% of the weight of the positive electrode material (lithium compound), indicating that 43.1% of the initial carbon content was volatilized off.

The carbide state in the particulate positive electrode material (secondary particles) was examined by X-ray diffractometry. Although the carbide did not have so high crystallinity, it had a lattice spacing in [002] plane of 0.39±0.01 nm, which was greater than the lattice spacing of graphite equal to 0.335 nm.

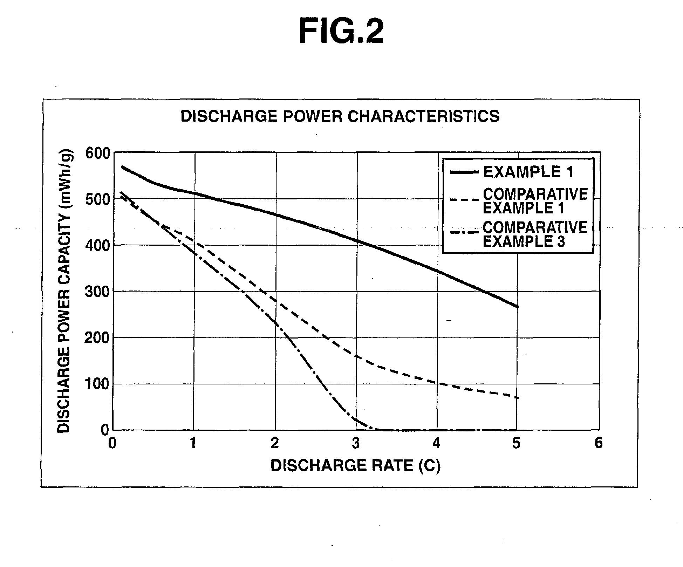

The particulate positive electrode material (secondary particles) was mixed with Ketjen Black (Mikuni Color Ltd.) and polyvinylidene fluoride (PVDF) in N-methyl-2-pyrrolidone. The mix was coated onto an aluminum current collector and dried to form a positive electrode material sheet. A CR2032 coin type test cell was assembled using metallic lithium as negative electrode and the positive electrode material sheet as positive electrode, and evaluated for a power capacity per unit mass of the particulate positive electrode material (secondary particles) during low rate and high rate charge/discharge operations. The results are shown in the diagram of FIG. 2. The cell showed a capacity of 580 mWh/g during charge/discharge at a low rate of 0.1 C. The cell also showed a capacity of 276 mWh/g during charge/discharge at a high rate of 5 C, maintaining 48% of the capacity during low rate charge/discharge.

### Comparative Example 1

One (1) mole of lithium phosphate, 0.5 mole of iron(II) sulfate, and 0.5 mole of manganese(II) sulfate were mixed in 1 L of water, and agitated for 30 minutes to form a mixed slurry at pH 6.7. The slurry was fed into an autoclave where it was heated at 150°C for 20 hours to effect hydrothermal reaction to synthesize a lithium compound LiMn_{0.5}Fe_{0.5}PO₄ as primary particles.

The primary particles of the lithium compound were mixed and dispersed in 1.5 L of water together with 20% by weight of sucrose based on the weight of the primary particles. The dispersion was dried for 24 hours in a rotary kiln (laboratory rotary kiln RK-0330 by Motoyama Co., Ltd.) at 50°C. The resulting mixture in flake form was ground on a mortar and screen sieved, obtaining sucrose-laden aggregated particles having an average particle size of 4.2 µm. The carbon content of the sucrose-laden aggregated particles was measured to be 8.3% of the weight of the positive electrode material (lithium compound).

The sucrose-laden aggregated particles were fired in an Ar stream at 780°C for 30 minutes, yielding particulate positive electrode material (secondary particles) having an average particle size of 4.5 µm. The carbon content of the secondary particles was measured to be 6.0% of the weight of the positive electrode material (lithium compound), indicating that 28.2% of the initial carbon content was volatilized off.

Using the resulting particulate positive electrode material (secondary particles), a CR2032 coin type test cell was assembled as in Example 1. The cell was evaluated for a power capacity per unit mass of the particulate positive electrode material (secondary particles) during low rate and high rate charge/discharge operations. The results are also shown in the diagram of FIG. 2. The cell showed a capacity of 510 mWh/g during charge/discharge at a low rate of 0.1 C, which was about 88% of the capacity in Example 1. The cell also showed a capacity of 80 mWh/g during charge/discharge at a high rate of 5 C, which was about 29% of the capacity in Example 1.

### Comparative Example 2

One (1) mole of lithium phosphate, 0.5 mole of iron(II) sulfate, and 0.5 mole of manganese(II) sulfate were mixed in 1 L of water, and agitated for 30 minutes to form a mixed slurry at pH 6.7. The slurry was fed into an autoclave where it was heated at 150°C for 20 hours to effect hydrothermal reaction to synthesize a lithium compound LiMn_{0.5}Fe_{0.5}PO₄ as primary particles.

The primary particles of the lithium compound were mixed and dispersed in 1.5 L of water together with 20% by weight of sucrose based on the weight of the primary particles. The dispersion was granulated and dried by a rotary atomizer type spray dryer (GEA Niro by GEA Process Engineering), obtaining sucrose-laden aggregated particles having an average particle size of 4.8 µm. The carbon content of the sucrose-laden aggregated particles was measured to be 7.8% of the weight of the positive electrode material (lithium compound).

The sucrose-laden aggregated particles were fired in an Ar stream at 800°C for 30 minutes, yielding particulate positive electrode material (secondary particles) having an average particle size of 5 µm. The carbon content of the secondary particles was measured to be 2.2% of the weight of the positive electrode material (lithium compound), indicating that 72% of the initial carbon content was volatilized off.

Using the resulting particulate positive electrode material (secondary particles), a CR2032 coin type test cell was assembled as in Example 1. The cell was evaluated for a power capacity per unit mass of the particulate positive electrode material (secondary particles) during low rate and high rate charge/discharge operations. The cell showed a capacity of 350 mWh/g during charge/discharge at a low rate of 0.1 C, which was about 60% of the capacity in Example 1. The cell also showed a capacity of 30 mWh/g during charge/discharge at a high rate of 5 C, which was about 11% of the capacity in Example 1.

### Comparative Example 3

Using commercially available carbon-coated LiFePO₄ particles (SEI Corp.), a CR2032 coin type test cell was assembled as in Example 1. The cell was evaluated for a power capacity per unit mass of the particulate positive electrode material (secondary particles) during low rate and high rate charge/discharge operations. The results are also shown in the diagram of FIG. 2. The cell showed a capacity of 504 mWh/g during charge/discharge at a low rate of 0.1 C, which was about 87% of the capacity in Example 1. The cell also showed a capacity of substantially 0 mWh/g during charge/discharge at a high rate of 5 C.

### Notes

(1) In respect of numerical ranges disclosed in the present description it will of course be understood that in the normal way the technical criterion for the upper limit is different from the technical criterion for the lower limit, i.e. the upper and lower limits are intrinsically distinct proposals.
(2) For the avoidance of doubt it is confirmed that in the general description above, in the usual way the proposal of general preferences and options in respect of different features of the method and product thereof constitutes the proposal of general combinations of those general preferences and options for the different features, insofar as they are combinable and compatible and are put forward in the same context.

## Claims

1. A method for preparing a particulate positive electrode material for lithium ion cells, comprising the steps of:
mixing and dispersing manganese (II) sulfate, iron(II) sulfate, and lithium phosphate and/or lithium hydrogenphosphate in water to form a slurry at pH 5 to 9,
feeding the slurry into an autoclave and effecting hydrothermal reaction therein at a temperature of 130 to 180°C to synthesize a lithium compound having the formula (1):
**LiMnₓFe₁₋ₓPO₄** (1)
wherein x is a positive number of 0.05 to 0.5, as primary particles,
preparing a particle dispersion comprising the primary particles and 4% to 40% by weight of an organic substance based on the weight of the primary particles, spraying the dispersion as mist, granulating, and drying, obtaining aggregated particles having an average particle size of 0.5 µm to 4 µm, and
firing the aggregated particles at a temperature of 600°C to 780°C for carbonizing the organic substance therein, yielding secondary particles having a carbon content corresponding to 30% to 70% by weight of the carbon content of the aggregated particles prior to the firing step, and an average particle size of 0.5 to 4 µm.

2. A method of claim 1 wherein the step of spraying the dispersion, granulating, and drying is performed by a spray dryer with fluid spraying nozzles.

3. A method of claim 1 or 2 wherein the organic substance is water-soluble compound of carbon, hydrogen and oxygen.

4. A method of claim 1 or 2 wherein the organic substance is selected from saccharides, ascorbic acid, polyethylene glycol and tetraethylene glycol.

5. A method of any one of claims 1 to 4 wherein the slurry has a pH of 6.5 or higher.

6. A method of any one of claims 1 to 5 wherein the primary particles have an average particle size of 0.2 to 2 µm.

7. A method of any one of claims 1 to 6 wherein the secondary particles have a carbon content of 2% to 15% by weight based on the weight of the lithium compound.

8. A method of any one of claims 1 to 7 in which the primary particles of the lithium compound are separated from the slurry after the hydrothermal synthesis and dispersed again in water to form said particle dispersion with said organic substance.

9. A method of any one of claims 1 to 8 followed by incorporating the electrode material into a lithium ion cell, positive electrode, or electrode composition.

## Patentansprüche

1. Verfahren zur Herstellung eines teilchenförmigen, Positivelektrodenmaterials für Lithiumionenzellen, das die folgenden Schritte umfasst:
das Mischen und Dispergieren von Mangan(II)-sulfat, Eisen(II)-sulfat und Lithiumphosphat und/oder Lithiumhydrogenphosphat in Wasser, um eine Aufschlämmung mit pH 5 bis 9 zu bilden,
das Einspeisen der Aufschlämmung in einen Autoklaven und das Bewirken einer hydrothermalen Reaktion darin bei einer Temperatur von 130 bis 180 °C, um eine Lithiumverbindung mit der Formel (1):
**LiMnₓFe₁₋ₓPO₄** (1)
worin x eine positive Zahl von 0,05 bis 0,5 ist, als primäre Teilchen zu synthetisieren,
das Herstellen einer Teilchendispersion, die die primären Teilchen und 4 Gew.-% bis 40 Gew.-% einer organischen Substanz, bezogen auf das Gewicht der primären Teilchen, umfasst, das Versprühen der Dispersion als Nebel, das Granulieren und Trocknen, das Erhalten von aggregierten Teilchen mit einer mittleren Teilchengröße von 0,5 µm bis 4 µm und
das Brennen der aggregierten Teilchen bei einer Temperatur von 600 °C bis 780 °C, um die organische Substanz darin zu verkohlen, was sekundäre Teilchen mit einem Kohlenstoffgehalt, der 30 Gew.-% bis 70 Gew.-% des Kohlenstoffgehalts der aggregierten Teilchen vor dem Brennschritt entspricht, und einer mittleren Teilchengröße von 0,5 bis 4 µm ergibt.

2. Verfahren nach Anspruch 1, worin der Schritt des Versprühens der Dispersion, des Granulierens und Trocknens mittels eines Sprühtrockners mit Fluidsprühdüsen vorgenommen wird.

3. Verfahren nach Anspruch 1 oder 2, worin die organische Substanz eine wasserlösliche Verbindung von Kohlenstoff, Wasserstoff und Sauerstoff ist.

4. Verfahren nach Anspruch 1 oder 2, worin die organische Substanz aus Sacchariden, Ascorbinsäure, Polyethylenglykol und Tetraethylenglykol ausgewählt ist.

5. Verfahren nach einem der Ansprüche 1 bis 4, worin die Aufschlämmung einen pH von 6,5 oder mehr aufweist.

6. Verfahren nach einem der Ansprüche 1 bis 5, worin die primären Teilchen einen mittleren Teilchendurchmesser von 0,2 bis 2 µm aufweisen.

7. Verfahren nach einem der Ansprüche 1 bis 6, worin die sekundären Teilchen einen Kohlenstoffgehalt von 2 Gew.-% bis 15 Gew.-%, bezogen auf das Gewicht der Lithiumverbindung, aufweisen.

8. Verfahren nach einem der Ansprüche 1 bis 7, worin die primären Teilchen der Lithiumverbindung nach der hydrothermalen Synthese von der Aufschlämmung getrennt und erneut in Wasser dispergiert werden, um die Teilchendispersion mit der organischen Substanz zu bilden.

9. Verfahren nach einem der Ansprüche 1 bis 8, auf das das Einarbeiten des Elektrodenmaterials in eine Lithiumionenzelle, eine positive Elektrode oder eine Elektrodenzusammensetzung folgt.

## Revendications

1. Procédé pour préparer un matériau d'électrode positive particulaire pour piles au lithium-ion, comprenant les étapes consistant à :
mélanger et disperser du sulfate de manganèse(II), du sulfate de fer(II) et du phosphate de lithium et/ou de l'hydrogénophosphate de lithium dans de l'eau pour former une bouillie à un pH de 5 à 9,
introduire la bouillie dans un autoclave et y effectuer une réaction hydrothermale à une température de 130 à 180°C pour synthétiser un composé du lithium de formule (1) :
LiMnₓFe₁₋ₓPO₄ (1)
dans laquelle x est un nombre positif de 0,05 à 0,5,sous la forme de particules primaires,
préparer une dispersion de particules comprenant les particules primaires et 4 % à 40 % en poids, par rapport au poids des particules primaires, d'une substance organique, pulvériser la dispersion sous la forme d'une brume, granuler, et sécher, ce qui donne des particules agrégées ayant une granulométrie moyenne de 0,5 µm à 4 µm, et
brûler les particules agrégées à une température de 600°C à 780°C pour y carboniser la substance organique, ce qui donne des particules secondaires ayant une teneur en carbone correspondant à 30 % à 70 % en poids de la teneur en carbone des particules agrégées avant l'étape de brûlage, et une granulométrie moyenne de 0,5 à 4 µm.

2. Procédé selon la revendication 1, dans lequel l'étape de pulvérisation de la dispersion, de granulation, et de séchage, est effectuée au moyen d'un séchoir par pulvérisation avec des buses de pulvérisation de fluide.

3. Procédé selon la revendication 1 ou 2, dans lequel la substance organique est un composé soluble dans l'eau de carbone, d'hydrogène et d'oxygène.

4. Procédé selon la revendication 1 ou 2, dans lequel la substance organique est choisie parmi les saccharides, l'acide ascorbique, le polyéthylèneglycol et le tétraéthylèneglycol.

5. Procédé selon l'une quelconque des revendications 1 à 4, dans lequel la bouillie a un pH de 6,5 ou plus.

6. Procédé selon l'une quelconque des revendications 1 à 5, dans lequel les particules primaires ont une granulométrie moyenne de 0,2 à 2 µm.

7. Procédé selon l'une quelconque des revendications 1 à 6, dans lequel les particules secondaires ont une teneur en carbone de 2 % à 15 % en poids par rapport au poids du composé du lithium.

8. Procédé selon l'une quelconque des revendications 1 à 7, dans lequel les particules primaires du composé du lithium sont séparées de la bouillie après la synthèse hydrothermale et dispersées de nouveau dans de l'eau pour former ladite dispersion de particules avec ladite substance organique.

9. Procédé selon l'une quelconque des revendications 1 à 8, suivi de l'incorporation du matériau d'électrode dans une pile au lithium-ion, une électrode positive, ou une composition d'électrode.
